# EUROPEAN PATENT SPECIFICATION

(11) **EP 1 981 219 B1**
(45) Date of publication and mention of the grant of the patent: **10.04.2013**
(21) Application number: 07702134.3
(22) Date of filing: 18.01.2007
(51) Int. Cl.: H04L 12/24, H04L 12/911

(54) **AN APPARATUS FOR PROVIDING THE END-TO-END QOS GUARANTEE AND A METHOD THEREOF**
EINRICHTUNG ZUR BEREITSTELLUNG VON END-ZU-END-QOS GARANTIE UND VERFAHREN DAFÜR
APPAREIL POUR OBTENIR LA GARANTIE DE QUALITÉ DE SERVICE DE BOUT EN BOUT ET SON PROCÉDÉ

(30) Priority: 30.05.2006 CN 200610083218
(43) Date of publication of application: 15.10.2008
(73) Proprietor: Huawei Technologies Co., Ltd., Longgang District, Shenzhen Guangdong 518129 (CN)
(72) Inventor: ZOU, Xianjun, Guangdong 518129 (CN); LI, Yan, Guangdong 518129 (CN); SHI, Xiaomin, Guangdong 518129 (CN)
(74) Representative: Pfenning, Meinig & Partner GbR
(86) International application number: PCT/CN2007/000202
(87) International publication number: WO 2007/140673

(56) References cited:
- CN-A- 1 595 887
- CN-A- 1 705 296
- US-A1- 2002 019 873
- US-A1- 2002 174 219
- US-A1- 2002 194 310
- US-A1- 2003 061 356
- US-A1- 2004 054 780

## Description

### Field of the Invention

The present invention relates to the field of network communication, and more particularly, to an apparatus and a method for providing end-to-end Quality of Service (QoS) guarantee within a service network.

### Background of the Invention

With the development of telecommunication network technology and subscriber demand, various uni-service network operators are turning to integrated information providers. Uni-service network operators mainly provide traditional voice service to subscribers, and integrated information providers mainly provide rich multimedia services and data services to subscribers, for example, provide multimedia message service (MMS), news, video phone, interactive message, game, music, entertainment, location service etc. to subscribers. These multimedia services and data services have attracted more subscribers, and have brought operators more network service traffic and business income, meanwhile these rich multimedia services and data services have constituted a new overlay network, namely service network.

With the continuous emerging of various rich multimedia services and data services and the continuous increasing of various subscriber demands, the future telecommunication network will be centered on subscribers, mainly to meet various performance requirement of subscribers on the services, and take into account the subscribers' satisfaction and loyalty to the network operators.

Compared with traditional telecommunication service such as voice service, the types and complexity of the multimedia service and data service increase, and the multimedia service and data service have more complicated service logic. It might need the coordination of multiple service servers within the service network to accomplish a subscriber service. For example, the currently hot composite service, service chain etc. all need the coordination of multiple application servers within the service network to meet subscriber demands.

How to guarantee that subscribers can still achieve good service experience in the above situation is an issue required to be solved by the network operators.

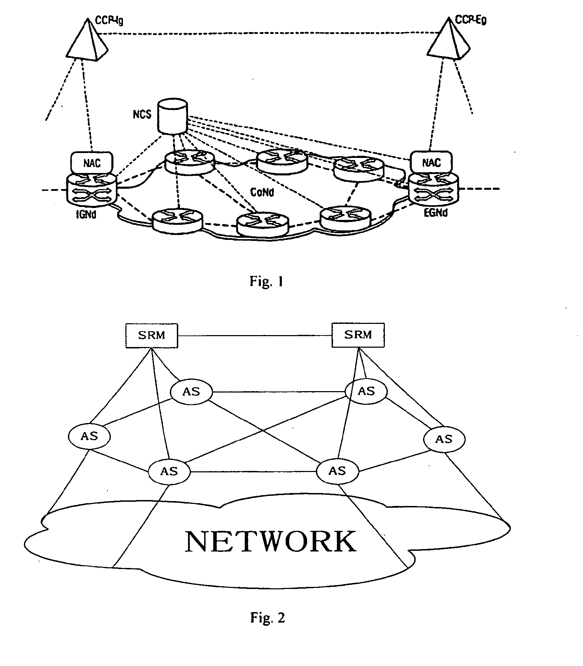

In the prior art, a method of providing QoS guarantee for subscriber service within a service network is a solution employing a network admission system. The architecture of the solution is shown in Figure 1. In the solution, one or more Network Admission Controls (NAC) are deployed at edge nodes and one or more Network Control Servers (NCS) are deployed in a core network. Whether to permit requested data flow to pass through the current network or not are determined according to resource utilization, load ratio, QoS guarantee needed by the requested data flow in the current network. The method is mainly used to avoid resource bottleneck and guarantee data transmission with QoS requirement.

The above method in the prior art has the following defects:

1. The method aims at a single type of application server, and all the monitored resources are unified homogeneous resources. But resources contained in various heterogeneous application servers are different from each other, and the method can not provide resource monitoring and admission control for various different heterogeneous application servers simultaneously. Therefore, the method does not have scalability and can not be applied to the whole service network.

2. The method can not choose and detect required application servers according to the characteristic of requested data flow.
US 2002/019873 A1 discloses System and method for modeling and provisioning information system capacity comprising: Models of capacity of an information system are described. The models may be queried when a new session arrives at the information system, to determine whether to accept the session as is, demand new capacity from an alternate server in order to fulfill the session, or reject the session. The models employ feature vectors to represents states of the information system. Parameters in the feature vectors may include load measurements on CPUs in the information system; load measurements on memory in servers employed in the information system; transactions per second conducted in databases in the information system; rate at which requests arrive from referral URLs to the information system; number of sessions in the information system; CPU utilization in the information system; database utilization in the information system.
US 2002/174219 A1 discloses System and method for providing gracefully degraded services on the internet under overloaded conditions comprising: An arrangement for providing gracefully degraded services on the Internet under overloaded conditions, involving tagging user request to indicate the status of said request and providing appropriate level of degraded services gracefully responsive to said tagging information.
US 2004/054780 A1 discloses Dynamic adaptive server provisioning for blade architectures comprising: A system and method for automatically allocating computing resources of a rack-and-blade computer assembly. The method includes receiving server performance information from an application server pool disposed in a rack of a rack-and-blade computer assembly, and determining at least one QoS attribute for the application server pool. If the QoS attribute is below a standard, a blade server is allocated from a free server pool for use by the application server pool. If the QoS attribute is above a standard, at least one server is removed from the application server pool. An article of manufacture including a machine-readable medium having stored thereon instructions for automatically allocating computing resources of a rack-and-blade computer assembly.

### Summary of the Invention

An object of an embodiment of the present invention is to provide an apparatus and a method for providing end-to-end QoS guarantee within a service network, so as to guarantee end-to-end service QoS within the service network and improve utilization efficiency of application servers within the service network.

The object of the embodiment of the present invention is achieved by the following technical solution:

An apparatus for providing end-to-end QoS guarantee within a service network includes a Service Resource Monitor/Manager (SRM), and the SRM includes a resource management unit and a service processing unit.

The resource management unit is adapted to monitor and manage resource utilization of application servers within the service network; return information about resource utilization of corresponding application servers according to a query request sent by the service processing unit.

The service processing unit is adapted to send the query request to the resource management unit according to information about QoS requirement required by the subscriber service which is carried in a received service request, receive the information about resource utilization of the corresponding application servers, generate a processing plan for the subscriber service according to the information about QoS requirement and the information about resource utilization, and deliver the specific processing plan to a sender of the service request, the processing plan comprises denial of the service request of the subscriber service, or a list of application servers which provide service for the subscriber service and addresses of the application servers.

A method is to provide the end-to-end QoS guarantee within a service network, an Service Resource Monitor/Manager (SRM) being configured in the service network. The method particularly includes: monitoring and managing, by the SRM, resource utilization of application servers within the service network; after receiving a service request of a subscriber service, generating, by the SRM, a processing plan for the subscriber service according to the obtained information about resource utilization of the application servers within the service network and QoS requirement required by the subscriber service which is carried in the service request, and delivering the specific processing plan to a sender of the service request, the processing plan comprises denial of the service request of the subscriber service, or a list of application servers which provide service for the subscriber service and addresses of the application servers.

It can be seen from the technical solution according to the embodiment of the present invention, by deploying an SRM in a service network, the SRM may dynamically monitor resource utilization of application servers within the service network and dynamically generate a specific service processing plan; the present invention may guarantee end-to-end service QoS within the service network, improve utilization efficiency of application servers within the service network, assure subscribers' service use and experience to the maximum extent, and optimize resource utilization efficiency within the whole service network. The present invention solves the problems in the prior art that heterogeneous QoS guarantee can not be carried out according to the characteristic of the service and required application servers can not be chosen and detected dynamically.

### Brief Descriptions of the Drawings

Figure 1 is a schematic diagram illustrating the architecture of a solution employing a network admission system in the prior art;

Figure 2 is a schematic diagram illustrating the architecture of a network when SRMs are deployed in a distributed manner; and

Figure 3 is a schematic diagram illustrating the functional architecture of an SRM according to an embodiment of the present invention.

### Detailed Descriptions of the Embodiments

An embodiment of the present invention provides an apparatus and a method providing end-to-end QoS guarantee within a service network. The main technical characteristics of the embodiment of the present invention are as follows: an SRM is provided within the service network; the SRM dynamically monitors resource utilization of application servers within the service network, and generates a specific service processing plan according to the obtained resource utilization, control policy and QoS requirement of subscriber service.

The apparatus of the present invention will be discussed in detail below in conjunction with the figures. The apparatus according to the embodiment of the present invention is implemented by an SRM.

As a resource management apparatus, the SRM dynamically monitors and manages resource utilization of application servers within the service network. The resource utilization includes information about QoS parameters of application servers, transmission delay among application servers, media resources provided by application servers etc. The information about QoS parameters includes load ratio, response time, bandwidth, code rate, display resolution etc. of application servers. QoS parameters corresponding to each kind of application server are different, some might be load ratio and bandwidth, some might be code rate and display resolution, and some might be bandwidth and display resolution.

The SRM generates a processing plan for the subscriber service according to the information about QoS parameters required by the subscriber service through the application servers, the obtained information about resource utilization of the application servers, and preset information about control policy, and delivers the processing plan to the application servers.

The SRM may be deployed in the service network in a centralized manner, a distributed manner or a mixed manner. When deployed in a centralized manner, one SRM needs to monitor and manage resource utilization of all the application servers within the whole service network. When deployed in a distributed manner or a mixed manner, it might need multiple SRMs to monitor and manage resource utilization of all the application servers within the service network, each SRM might monitor resource utilization of one or more application servers, and there are communication interfaces between SRMs. When SRMs are deployed in a distributed manner, the architecture of the service network is shown in Figure 2. In Figure 2, AS is an application server.

As shown in Figure 2, the lowest layer of the architecture of the service network is a fundamental network layer, which is used to assure the communication between application servers, between application server and SRM, and between SRMs. The fundamental network layer may include multiple routers and physical links, which are used to process specific subscriber service and provide application service for the subscriber service. The service network is above the fundamental network layer, and in the service network it might need the coordination among multiple application servers to process a service request of one subscriber service.

The relationship between SRM and application server may be one-to-one or one-to-many. SRMs need to communicate with each other, so as to provide end-to-end QoS guarantee within the whole service network.

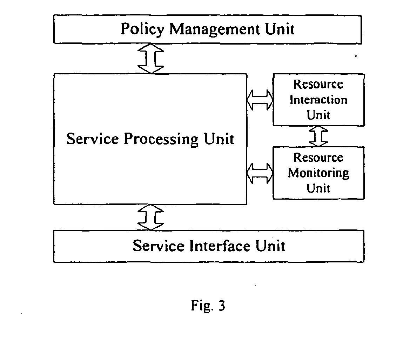

As shown in Figure 3, the function architecture of the SRM includes a service interface unit, a resource monitoring unit, a resource interaction unit, a service processing unit, a policy management unit etc.

The function of each module in the SRM is described as follows:

1) The service interface unit provides query and response interfaces for a subscriber service, receives a service request of the subscriber service using the query interface, the service request being sent through an application server, and delivers the received service request to the service processing unit. The service request includes QoS parameter value, QoS parameter name and relevant requirement required by the subscriber service, and the identifiers and the number of required application servers. The QoS parameter requirement includes but is not limited to response time for the whole service, required bandwidth, etc. Through the response interface, the service interface unit also delivers a specific processing plan that the service processing unit has generated for the subscriber service to the application server that has sent the service request. The specific processing plan includes information about a list of application servers that provide service for the subscriber service and addresses of the application servers, or information about denial of the service request of the subscriber service.

2) The resource monitoring unit monitors and manages resource utilization of managed application servers. The resource monitoring unit may initiatively query resource utilization of the relevant application servers. Alternatively, each application server may initiatively report the current resource utilization to the resource monitoring unit. The resource monitoring unit saves the obtained information about resource utilization of the application servers, and delivers the information to the service processing unit. A resource status list may be maintained in the resource monitoring unit, the resource status list includes: ID of application server, address of application server and various QoS parameters provided by the application server. These QoS parameters include but are not limited to: the current response time, the current load ratio, the current available bandwidth of the application server, etc. Because the QoS parameters that each kind of application server involves are different, it is quite difficult to perform unified modeling by means of database, so the resource status list is stored in the resource monitoring unit in the format of Extensible Markup Language (XML). And parameters of available resources of the relevant application servers are modified according to a policy delivered from the service processing unit.

The format of the XML file used to describe the resource status list may be as follows:

```
  <AppQoS xmlns="http://huawei.com/appqos.xsd">
     <service name="movieserver" address=" 127.0.0.1">
          <Parameter      name="bandwidth"      mode="equal"      unit="Mbps"
          needTransfer="TRUE">
               <value>60</value>
                <value>40</value>
          </Parameter>
          <Parameter      name="responsetime"      mode="less"      unit="ms"
          needTransfer-"FALSE" >
               <value>40</value>
          </Parameter>
          <Parameter      name="bitrate"      mode="equal"      unit="Mbps"
          needTransfer="TRUE">
               <value>10</value>
          </Parameter>
     </service>
 </AppQoS>
```

A Schema corresponding to the XML file is as follows:

```
 <xsd:Schema targetNamespace="http://huawei.com/appqos.xsd"
                    xmlns:xsd="http://www.w3.org/1999/XMLSchema">
          <xsd:element name="AppQoS">
                   <xsd:complexType>
                          <xsd:sequence>
                              <xsd:element      name="service"      minOccurs="0"
                              maxOccurs="unbounded">
                   <xsd:complexType>
                     <xsd:sequence>
                              <xsd:element      name="Parameter"      minOccurs="0"
                              maxOccurs="unbounded">
                                        <xsd:complexType>
                                                <xsd:sequence>
                                                             <xsd:element
name="value" type="xsd:int" minOccurs="1" maxOccurs="unbounded">
                                                 <xsd:sequence>
                                                 <xsd:amibute      name="mode"
                                                 type="modeType" minOccurs="0"/>
                                                 <xsd:amibute      name="unit"
                                                 type="unitType" minOccurs="0"/>
                                                 <xsd:amibute name="needTransfer"
                                                 type="Boolean" minOccurs="0"/>
                                        </xsd:complexType>
                             </xsd:element>
                     </xsd:sequence>
                                     <xsd:attribute name="address" type="xsdatring"
                                     />
             <xsd:attribute name="name" type="xsd:string"/>
                 </xsd:complexType>
                           </xsd:element>
                       </sequence>
                 </xsd:complexType>
          </xsd:element>
          <xsd:simpleType name="modeType">
              <xsd:restriction base="xsd:string">
                   <xsd:enumeration value="less"/>
                   <xsd:enumeration value="more"/>
                   <xsd:enumeration value="equal"/>
              </xsd:restriction>
         </xsd:simpleType>
        <xsdaimpleType name="unitType">
              <xsd:restriction base="xsd:string">
                   <xsd:enumeration value="ms"/>
                   <xsd:enumeration value="Mbps"/>
                   <xsd:enumeration value="Kbps"/>
                   <xsd:enumeration value="s">
              </xsd:restriction>
         </xsd:simpleType>
 </xsd:Schema>
```

Annotation for the Schema: the Schema may describe information about application QoS corresponding to a service itself, and also may describe information about service and QoS required in a service request. In the XML file, the element 'service' represents the actual service, and the attribute 'name' of the actual service represents the name of the service and 'address' indicates the current address of the service (the attribute is optional in the service request description). 'Parameter' is used to describe information about QoS parameters corresponding to the service; the attribute 'name' indicates the name of the parameter; and 'mode' represents a mode. In the QoS description of the service itself; the attribute 'mode' is used to describe QoS guarantee that the application server can provide; 'less' indicates that the QoS value provided by the application server is less than the value in the sub element 'value'; 'equal' indicates that the QoS value provided by the application server is equal to the value in the sub element 'value'; if there are multiple 'value's, this indicates that the service may provide multiple levels of service; 'more' indicates the QoS value is greater than the value in the sub element 'value'. In the service request, the attribute 'mode' is used to describe QoS characteristic required by the service request. It should be noted that for the attribute 'mode', 'less' indicates that the required QoS is less than the value in the sub element 'value', 'equal' indicates that the required QoS is equal to the value in the sub element 'value', and 'more' indicates that the required QoS is greater than the value in the sub element 'value'.

3) The resource interaction unit provides an interaction interface between SRMs. An SRM may send a resource query request to another SRM through the interaction interface to obtain resource utilization of application servers managed by the other SRM. The resource query request sent to the other SRM includes application server types, QoS parameters required by the subscriber service, etc.

An SRM may also receive a resource query request sent from another SRM through the interaction interface and return a response message. When an SRM responds to a query request from another SRM, the SRM needs to interact with the resource monitoring unit to get information about resource utilization of the relevant application servers. The returned response message includes the identifiers, the addresses and the current resource utilization (such as the current response time) of the application servers.

It should be noted that the application servers required by the subscriber service might not be in the management precinct of the current SRM but in the management precinct of another SRM; therefore, interactive communication among SRMs is needed in order to achieve end-to-end QoS guarantee.

4) The service processing unit is a master control module of the SRM, and performs specific subscriber service processing. According to application server types required by the subscriber service which are carried in the service request sent from the service interface unit and application server types monitored by the current SRM, the service processing unit queries the resource interaction unit and/or resource monitoring unit respectively.

According to the current policy delivered from the policy management unit, the current information about resource utilization of each application server and QoS parameters required by the subscriber service returned from the resource interaction unit and/or resource monitoring unit, the service processing unit generates a specific service processing plan, and delivers the processing plan to the application server that has sent the service request through the service interface unit. The specific processing plan may be denial of the service request, or may be a specific list of application servers that meet the requirement of the service request and addresses of the application servers.

5) The policy management unit provides a specific control policy for the subscriber service and the corresponding algorithm, and delivers the control policy and the corresponding algorithm to the service processing unit. The specific control policy includes but is not limited to:

1. Choosing an application server with the shortest response time currently under the condition that QoS requirement of the subscriber service is met.

2. Choosing application servers with the smallest load ratio currently under the condition that QoS requirement of the subscriber service is met.

3. Choosing appropriate application servers randomly under the condition that QoS requirement of the subscriber service is met.

4. Choosing application servers with parameter values closest to the values of the QoS parameters of the subscriber service under the condition that QoS requirement of the subscriber service is met.

Base on the above apparatus, a procedure of a method according to an embodiment of the present invention includes the following blocks:

Block 1: an application server sends a service request for a subscriber service to an SRM which the application server belongs to through the service interface unit of the SRM. The service request carries information about application server types and QoS parameters required by the subscriber service.

Block 2: the service processing unit of the SRM obtains information about application server types and QoS parameters required by the subscriber service from the received service request.

When the application server types required by the subscriber service are all stored in the resource monitoring unit of the SRM, the service processing unit of the SRM sends a query request to the resource monitoring unit of the SRM to obtain resource utilization of the corresponding application servers. The resource monitoring unit obtains information about the addresses and the current resource utilization of the application servers required by the subscriber service according to the query request sent by the service processing unit, and returns the obtained information about the addresses and the current resource utilization of the application servers to the service processing unit.

When the application server types required by the subscriber service are all in the management precinct of other SRMs, the service processing unit of the SRM sends a query request to the resource interaction unit. The resource interaction unit interacts with the other SRMs, transfers the received query request to the other SRMs, and receives information about the addresses and the current resource utilization of the application servers required by the subscriber service returned by the other SRMs and returns the received information about the addresses and the current resource utilization of the application servers to the service processing unit.

When application server types required by the subscriber service are both in the resource monitoring unit of the SRM and in the management precinct of other SRMs, the service processing unit of the SRM sends a query request to both the resource interaction unit and the resource monitoring unit, and receives information about the addresses and the current resource utilization of the application servers required by the subscriber service returned by the resource interaction unit and resource monitoring unit.

Block 3: According to the information about the addresses and the current resource utilization of the application servers required by the subscriber service returned by the resource interaction unit and/or resource monitoring unit, the current control policy delivered from the policy management unit and the QoS parameters required by the subscriber service, the service processing unit generates a specific service processing plan and delivers the processing plan to the application server which has sent the service request through the service interface unit. If the QoS requirement of the subscriber service can not be met, then the specific service processing plan is denial of the service request of the subscriber service. Otherwise, the specific service processing plan includes a list of application servers which provide service for the subscriber service and addresses of the application servers.

The resource monitoring unit of the SRM modifies the relevant resource parameters of the relevant application servers according to the obtained information about the addresses and the current resources of the application servers.

One scenario of the method according to the embodiment of the present invention is as follows:

A subscriber chooses a movie which he wants to watch by sending a short message. In this scenario, a short message server processes the message sent by the subscriber and transfers the relevant information to a movie server. The movie server plays the corresponding movie to the subscriber according to the received information.

There are a short message server 1, a short message server 2 and a short message server 3. The three short message servers are all managed by SRM1 and the current resource utilization of each short message server is as follows: server 1: delay = 0.5ms, load ratio = 50%; server 2: delay = 1ms, load ratio = 30%; server 3: delay = 2ms, load ratio = 70%.

There are a movie server 1 and a movie server 2. The two movie servers are both managed by SRM2 and the current resource utilization of each movie server is as follows: movie server 1: delay = 3ms, load ratio = 50%, bandwidth = 20K; movie server 2: delay = 4ms, load ratio = 40%, bandwidth = 40K. The current control policy is choosing application servers with the shortest response time under the condition that QoS requirement of the subscriber service is met.

SRM I receives the service request sent by the subscriber by means of short message. The service request carries information about the requirement of subscriber service on short message server and movie server and the QoS requirement of the subscriber service. Specifically, the information is as follows: the total delay < 5.5ms and bandwidth of movie server > 30K. SRM1 queries the resource monitoring unit according to the QoS requirement of the subscriber service, and the resource monitoring unit returns the current resource utilization of short message server 1 and short message server 2. Also, SRM1 sends a query request carrying the information about the QoS requirement of the subscriber service to SRM2, and SRM2 returns information about the current resource utilization of movie server 2 which meets the QoS requirement of the subscriber service (bandwidth > 30K).

According to the information returned from short message server 1, short message server 2, and SRM2, SRM1 determines the combinations of Short message server and Movie Server which meet the QoS requirement of the subscriber service currently:

Short message server 1, Movie server 2

Short message server 2, Movie server 2

Then, according to the current control policy, namely choosing application servers with the shortest response time, SRM I chooses short message server 1 and movie Server 2 to provide service for the subscriber service, and returns the relevant information about short message server 1 and movie server 2 to the subscriber who has sent the request.

What has been described above is only a preferred embodiment of the present invention, but the scope of the present invention is not limited thereto. Any variation or substitution easily conceivable by those skilled in the art within the technical scope disclosed in the present invention should be encompassed in the scope of the present invention. Therefore, the scope of the present invention should be defined by the claims.

## Claims

1. An apparatus comprising a Service Resource Monitor/Manager (SRM), the SRM comprising a resource management unit and a service processing unit, wherein
the resource management unit is adapted to monitor and manage resource utilization of application servers within a service network, and return information about resource utilization of corresponding application servers according to a query request sent by the service processing unit;
the service processing unit is adapted to send the query request to the resource management unit according to information, carried in a received service request, about QoS requirement required by a subscriber service, receive the information about resource utilization of the corresponding application servers returned by the resource management unit, generate a processing plan for the subscriber service according to the information about QoS requirement and the information about resource utilization, and deliver the specific processing plan to a sender of the service request, the processing plan comprising a list of application servers which provide service for the subscriber service and addresses of the application servers, in case the QoS requirement required by the subscriber service can be met.

2. The apparatus as claimed in claim 1, **characterized in that** the SRM further comprises:
a service interface unit adapted to receive the service request of the subscriber service sent through an application server, deliver the received service request to the service processing unit, and deliver the processing plan generated for the subscriber service by the service processing unit to the application server which has sent the service request.

3. The apparatus as claimed in claim 1, **characterized in that** the SRM further comprises:
a policy management unit adapted to provide a specific control policy for the subscriber service and deliver the control policy to the service processing unit,
the service processing unit is further adapted to generate a processing plan for the subscriber service according to the control policy, the information about QoS requirement, and the information about resource utilization.

4. The apparatus as claimed in any one of claim 1 to claim 3, **characterized in that** the resource management unit comprises:
a resource monitoring unit adapted to monitor resource utilization of managed application servers by initiative querying or by initiative reporting of application server, and modify information about resource parameters of relevant application servers according to the processing plan generated for the subscriber service by the service processing unit.

5. The apparatus as claimed in claim 4, **characterized in that** the resource management unit further comprises:
a resource interaction unit adapted to send a query request to another SRM and obtain resource utilization of application servers managed by the other SRMs, receive a query request from another SRM and return resource utilization of application servers managed by the SRM to the other SRM sending the query request.

6. A method for providing end-to-end QoS guarantee within a service network by configuring a Service Resource Monitor/Manager ,SRM,within the service network, the method comprising:
monitoring and managing, by the SRM, resource utilization of application servers within the service network;
after receiving a service request of a subscriber service, generating, by the SRM, a processing plan for the subscriber service according to the obtained resource utilization of the application servers within the service network, and information, carried in the service request, about QoS requirement required by the subscriber service, and delivering the specific processing plan to a sender of the service request,wherein the processing plan comprises a list of application servers which provide service for the subscriber service and addresses of the application servers in case the QoS requirement requiered by the subscriber service can be met.

7. The method as claimed in claim 6, **characterized in that** the method comprises:
receiving, by the SRM, the service request of the subscriber service sent through an application server, the service request carrying information about QoS requirement and application server type required by the subscriber service;
querying, by the SRM, resource utilization of application servers managed by the SRM and/or interacting with another SRM according to the information about QoS requirement required by the subscriber service, and obtaining information about resource utilization of corresponding application servers;
generating, by the SRM, the processing plan for the subscriber service according to the information about QoS requirement required by the subscriber service, the obtained information about resource utilization of corresponding application servers and a preset control policy information, and delivers the processing plan to the sender of the service request.

8. The method as claimed in claim 7, **characterized in that** the control policy comprises at least one of the following:
choosing application servers with the shortest response time under the condition that the QoS requirement of the subscriber service is met;
choosing application servers with the smallest load ratio under the condition that the QoS requirement of the subscriber service is met;
choosing application servers randomly under the condition that the QoS requirement of the subscriber service is met; and
choosing application servers with parameter values closest to values of QoS parameters required by the subscriber service under the condition that the QoS requirement of the subscriber service is met.

9. The method as claimed in claim 6 or claim 7, **characterized in that** the resource utilization of the application servers comprises information about QoS parameters of the application servers, and the information about QoS parameters comprises information about load ratio, response time, bandwidth, code rate and/or display resolution of the application servers.

## Patentansprüche

1. Vorrichtung, die einen Service Resource Monitor/Manager bzw. SRM umfasst, wobei der SRM eine Ressourcenverwaltungseinheit und eine Dienstverarbeitungseinheit umfasst, wobei
die Ressourcenverwaltungseinheit dafür ausgelegt ist, die Ressourcenbenutzung von Anwendungsservern in einem Dienstnetzwerk zu überwachen und zu verwalten und Informationen über die Ressourcenbenutzung von entsprechenden Anwendungsservern gemäß einer durch die Dienstverarbeitungseinheit gesendeten Anfrageanforderung zurückzugeben;
die Dienstverarbeitungseinheit dafür ausgelegt ist, die Anfrageanforderung zu der Ressourcenverwaltungseinheit gemäß in der empfangenen Dienstanforderung geführten Informationen über eine durch einen Teilnehmerdienst erforderte QoS-Anforderung zu senden, die von der Ressourcenverwaltungseinheit zurückgegebenen Informationen über Ressourcenbenutzung der entsprechenden Anwendungsserver zu empfangen, gemäß den Informationen über QoS-Anforderung und den Informationen über Ressourcenbenutzung einen Verarbeitungsplan für den Teilnehmerdienst zu erzeugen und den spezifischen Verarbeitungsplan an einen Absender der Dienstanforderung abzuliefern, wobei der Verarbeitungsplan eine Liste von Anwendungsservern, die Dienst für den Teilnehmerdienst bereitstellen, und Adressen der Anwendungsserver umfasst, falls die durch den Teilnehmerdienst erforderte QoS-Anforderung erfüllt werden kann.

2. Vorrichtung nach Anspruch 1, **dadurch gekennzeichnet, dass** der SRM ferner Folgendes umfasst:
eine Dienstschnittstelleneinheit, die dafür ausgelegt ist, die durch einen Anwendungsserver gesendete Dienstanforderung des Teilnehmerdienstes zu empfangen, die empfangene Dienstanforderung an die Dienstverarbeitungseinheit abzuliefern und den durch die Dienstverarbeitungseinheit für den Teilnehmerdienst erzeugten Verarbeitungsplan an den Anwendungsserver abzuliefern, der die Dienstanforderung gesendet hat.

3. Vorrichtung nach Anspruch 1, **dadurch gekennzeichnet, dass** der SRM ferner Folgendes umfasst:
eine Richtlinienverwaltungseinheit, die dafür ausgelegt ist, eine spezifische Steuerungsrichtlinie für den Teilnehmerdienst bereitzustellen und die Steuerungsrichtlinie an die Dienstverarbeitungseinheit abzuliefern,
wobei die Dienstverarbeitungseinheit ferner dafür ausgelegt ist, einen Verarbeitungsplan für den Teilnehmerdienst gemäß der Steuerungsrichtlinie, den Informationen über QoS-Anforderung und den Informationen über Ressourcenbenutzung zu erzeugen.

4. Vorrichtung nach einem der Ansprüche 1 bis 3, **dadurch gekennzeichnet, dass** die Ressourcenverwaltungseinheit Folgendes umfasst:
eine Ressourcenüberwachungseinheit, die dafür ausgelegt ist, eine Ressourcenbenutzung von verwalteten Anwendungsservern durch initiatives Anfragen oder durch initiatives Melden des Anwendungsservers zu überwachen und Informationen über Ressourcenparameter relevanter Anwendungsserver gemäß dem durch die Dienstverarbeitungseinheit für den Teilnehmerdienst erzeugten Verarbeitungsplan zu modifizieren.

5. Vorrichtung nach Anspruch 4, **dadurch gekennzeichnet, dass** die Ressourcenverwaltungseinheit ferner Folgendes umfasst:
eine Ressourceninteraktionseinheit, die dafür ausgelegt ist, eine Anfrageanforderung zu einem anderen SRM zu senden und Ressourcenbenutzung von durch die anderen SRM verwalteten Anwendungsservern zu erhalten, eine Anfrageanforderung von einem anderen SRM zu empfangen und Ressourcenbenutzung von durch den SRM verwalteten Anwendungsservern an den die Anfrageanforderung sendenden anderen SRM zurückzugeben.

6. Verfahren zum Bereitstellen einer Ende-zu-Ende-QoS-Garantie in einem Dienstnetzwerk durch Konfigurieren eines Service Resource Monitor/Manager bzw. SRM in dem Dienstnetzwerk, wobei das Verfahren Folgendes umfasst:
Überwachen und Verwalten der Ressourcenbenutzung von Anwendungsservern in dem Dienstnetzwerk durch den SRM;
nach dem Empfang einer Dienstanforderung eines Teilnehmerdienstes, Erzeugen eines Verarbeitungsplans für den Teilnehmerdienst durch den SRM gemäß der erhaltenen Ressourcenbenutzung der Anwendungsserver in dem Dienstnetzwerk und in der Dienstanforderung geführten Informationen über durch den Teilnehmerdienst erforderte QoS-Anforderung und Abliefern des spezifischen Verarbeitungsplans an einen Absender der Dienstanforderung, wobei der Verarbeitungsplan eine Liste von Anwendungsservern, die Dienst für den Teilnehmerdienst bereitstellen, und Adressen der Anwendungsserver umfasst, falls die durch den Teilnehmerdienst erforderte QoS-Anforderung erfüllt werden kann.

7. Verfahren nach Anspruch 6, **dadurch gekennzeichnet, dass** das Verfahren Folgendes umfasst:
Empfangen der durch einen Anwendungsserver gesendeten Dienstanforderung des Teilnehmerdienstes durch den SRM, wobei die Dienstanforderung Informationen über QoS-Anforderung und Anwendungsserverart, die durch den Teilnehmerdienst erfordert wird, führt;
Erfragen der Ressourcenbenutzung von durch den SRM verwalteten Anwendungsservern durch den SRM und/oder in Interaktion Treten mit einem anderen SRM gemäß den Informationen über durch den Teilnehmerdienst erforderte QoS-Anforderung und Erhalten von Informationen über Ressourcenbenutzung entsprechender Anwendungsserver;
Erzeugen des Verarbeitungsplans für den Teilnehmerdienst durch den SRM gemäß den Informationen über durch den Teilnehmerdienst erforderte QoS-Anforderung, der erhaltenen Informationen über Ressourcenbenutzung entsprechender Anwendungsserver und einer voreingestellten Steuerungsrichtlinieninformation und Abliefern des Verarbeitungsplans an den Absender der Dienstanforderung.

8. Verfahren nach Anspruch 7, **dadurch gekennzeichnet, dass** die Steuerungsrichtlinie mindestens eines der Folgenden umfasst:
Wählen von Anwendungsservern mit der kürzesten Ansprechzeit unter der Bedingung, dass die QoS-Anforderung des Teilriehmerdiensts erfüllt wird;
Wählen von Anwendungsservern mit dem kleinsten Lastverhältnis unter der Bedingung, dass die QoS-Anforderung des Teilnehmerdienstes erfüllt wird;
zufälliges Wählen von Anwendungsservern unter der Bedingung, dass die QoS-Anforderung des Teilnehmerdienstes erfüllt wird; und
Wählen von Anwendungsservern mit Parameterwerten, die Werten der durch den Teilnehmerdienst erforderten QoS-Parameter am nächsten kommen, unter der Bedingung, dass die QoS-Anforderung des Teilnehmerdienstes erfüllt wird.

9. Verfahren nach Anspruch 6 oder Anspruch 7, **dadurch gekennzeichnet, dass** die Ressourcenbenutzung der Anwendungsserver Informationen über QoS-Parameter der Anwendungsserver umfasst und die Informationen über QoS-Parameter Informationen über Lastverhältnis, Ansprechzeit, Bandbreite, Coderate und/oder Anzeigeauflösung der Anwendungsserver umfassen.

## Revendications

1. Appareil comprenant un Superviseur/Gestionnaire de Ressources de Service (SRM), le SRM comprenant une unité de gestion de ressources et une unité de traitement de service, dans lequel
l'unité de gestion de ressources est adaptée pour surveiller et gérer l'utilisation des ressources de serveurs d'applications dans un réseau de service, et renvoyer des informations relatives à l'utilisation des ressources de serveurs d'applications correspondants en fonction d'une requête d'interrogation envoyée par l'unité de traitement de service ;
l'unité de traitement de service est adaptée pour envoyer la requête d'interrogation à l'unité de gestion de ressources en fonction d'informations, incluses dans une requête de service reçue, relatives à la QoS requise par un service d'abonné, recevoir les informations relatives à l'utilisation des ressources des serveurs d'applications correspondants renvoyées par l'unité de gestion de ressources, générer un plan de traitement pour le service d'abonné en fonction des informations de QoS requise et des informations relatives à l'utilisation des ressources, et délivrer le plan de traitement spécifique à un expéditeur de la requête de service, le plan de traitement comprenant une liste de serveurs d'applications qui desservent le service d'abonné et les adresses des serveurs d'applications, quand la QoS requise par le service d'abonné peut être satisfaite.

2. Appareil selon la revendication 1, **caractérisé en ce que** le SRM comprend en outre :
une unité d'interface de service adaptée pour recevoir la requête de service du service d'abonné envoyée par un serveur d'application, délivrer la requête de service reçue à l'unité de traitement de service, et délivrer le plan de traitement généré pour le service d'abonné par l'unité de traitement de service au serveur d'application qui a envoyé la requête de service.

3. Appareil selon la revendication 1, **caractérisé en ce que** le SRM comprend en outre :
une unité de gestion de stratégie adaptée pour fournir une stratégie de commande spécifique du service d'abonné et délivrer la stratégie de commande à l'unité de traitement de service,
l'unité de traitement de service est adaptée en outre pour générer un plan de traitement pour le service d'abonné en fonction de la stratégie de commande, des informations de QoS requise, et des informations relatives à l'utilisation des ressources.

4. Appareil selon l'une quelconque des revendications 1 à 3, **caractérisé en ce que** l'unité de gestion de ressources comprend :
une unité de surveillance de ressources adaptée pour surveiller l'utilisation des ressources de serveurs d'applications gérés par initiative d'interrogation ou initiative de signalisation du serveur d'application, et modifier des informations sur les paramètres de ressources de serveurs d'applications pertinents en fonction du plan de traitement généré pour le service d'abonné par l'unité de traitement de service.

5. Appareil selon la revendication 4, **caractérisé en ce que** l'unité de gestion de ressources comprend en outre :
une unité d'interaction de ressources adaptée pour envoyer une requête d'interrogation à un autre SRM et obtenir une utilisation des ressources des serveurs d'applications gérés par les autres SRM, recevoir une requête d'interrogation depuis un autre SRM et renvoyer l'utilisation de ressources des serveurs d'applications gérés par le SRM à l'autre SRM qui envoie la requête d'interrogation.

6. Procédé de fourniture d'une garantie de QoS bout à bout dans un réseau de service en configurant un Superviseur/Gestionnaire de Ressources de Service, SRM, dans le réseau de service, le procédé comprenant :
la surveillance et la gestion, par le SRM, de l'utilisation des ressources de serveurs d'applications dans le réseau de service ;
après la réception d'une requête de service d'un service d'abonné, la génération, par le SRM, d'un plan de traitement pour le service d'abonné en fonction de l'utilisation des ressources obtenue des serveurs d'applications dans le réseau de service, et des informations, incluses dans la requête de service de QoS requise par le service d'abonné, et la délivrance du plan de traitement spécifique à un expéditeur de la requête de service, le plan de traitement comprenant une liste de serveurs d'applications qui desservent le service d'abonné et les adresses des serveurs d'applications, quand la QoS requise par le service d'abonné peut être satisfaite.

7. Procédé selon la revendication 6, **caractérisé en ce que** le procédé comprend :
la réception, par le SRM, de la requête de service du service d'abonné envoyée par le biais d'un serveur d'application, la requête de service incluant des informations sur la QoS requise et le type de serveur d'application requis par le service d'abonné ;
l'interrogation, par le SRM, de l'utilisation des ressources des serveurs d'applications gérés par le SRM et/ou interagissant avec un autre SRM en fonction des informations relatives à la QoS requise par le service d'abonné, et l'obtention d'informations relatives à l'utilisation des ressources de serveurs d'applications correspondants ;
la génération, par le SRM, du plan de traitement pour le service d'abonné en fonction des informations de QoS requise par le service d'abonné, des informations obtenues sur l'utilisation des ressources de serveurs d'applications correspondants et d'informations de stratégie de commande préétablie, et la délivrance du plan de traitement à l'expéditeur de la requête de service.

8. Procédé selon la revendication 7, **caractérisé en ce que** la stratégie de commande comprend au moins l'une des opérations suivantes :
le choix de serveurs d'applications ayant le temps de réponse le plus court quand la QoS requise du service d'abonné est satisfaite ;
le choix de serveurs d'applications ayant le rapport de charge le plus petit quand la QoS requise du service d'abonné est satisfaite ;
le choix aléatoire de serveurs d'applications quand la QoS requise du service d'abonné est satisfaite ; et
le choix de serveurs d'applications ayant des valeurs de paramètres les plus proches de valeurs de paramètres de QoS requises par le service d'abonné quand la QoS requise du service d'abonné est satisfaite.

9. Procédé selon la revendication 6 ou 7, **caractérisé en ce que** l'utilisation des ressources des serveurs d'applications comprend des informations sur des paramètres QoS des serveurs d'applications, et les informations sur les paramètres QoS comprennent des informations sur le rapport de charge, le temps de réponse, la largeur de bande, le taux de codage et/ou la résolution d'affichage des serveurs d'applications.
